# EUROPÄISCHE PATENTSCHRIFT

(11) **EP 2 580 116 B1**
(45) Veröffentlichungstag und Bekanntmachung des Hinweises auf die Patenterteilung: **26.10.2016**
(21) Anmeldenummer: 11728204.6
(22) Anmeldetag: 07.06.2011
(51) Int. Cl.: B63C 11/42, H01R 13/523, G11B 33/14

(54) **VORRICHTUNG UND VERFAHREN ZUM TRANSFERIEREN VON DATEN VON ODER ZU EINEM UNTERWASSERDRUCKKÖRPER**
APPARATUS AND METHOD FOR TRANSFERRING DATA FROM OR TO AN UNDERWATER PRESSURE BODY
DISPOSITIF ET PROCÉDÉ DE TRANSFERT DE DONNÉES DEPUIS UN CORPS SOUS PRESSION IMMERGÉ OU VERS CE DERNIER

(30) Priorität: 12.06.2010 DE 102010023602
(43) Veröffentlichungstag der Anmeldung: 17.04.2013
(73) Patentinhaber: ATLAS ELEKTRONIK GmbH, 28309 Bremen (DE)
(72) Erfinder: MARBACH, Marian, 28209 Bremen (DE)
(86) Internationale Anmeldenummer: PCT/EP2011/059406
(87) Internationale Veröffentlichungsnummer: WO 2011/154411

(56) Entgegenhaltungen:
- JP-A- 2001 251 543
- JP-A- 2006 251 225
- JP-A- 2007 028 188
- US-A1- 2005 057 849
- US-A1- 2006 005 759
- US-A1- 2006 220 201
- US-A1- 2007 033 320
- US-B1- 7 296 345

## Beschreibung

Die Erfindung betrifft eine Vorrichtung zur Transferierung von Daten von oder zu einem Unterwasserdruckkörper umfassend eine Massenspeichervorrichtung, auf der mittels einer im Inneren des Unterwasserdruckkörpers angeordneten Recheneinheit die Daten lesbar und/oder schreibbar sind, wobei mittels der Massenspeichervorrichtung die Daten zwischen der Recheneinheit des Unterwasserdruckkörpers und einer weiteren Recheneinheit transferierbar sind. Ferner betrifft die Erfindung ein Verfahren zum Transferieren der Daten einer derartigen Vorrichtung.

Bekannt sind unbemannte Unterwasserfahrzeuge, die während einer Mission regelmäßig große Datenmengen sammeln und zunächst im Inneren des Unterwasserfahrzeugs, nämlich auf einer im Unterwasserdruckkörper des Unterwasserfahrzeugs angeordneten Massenspeichervorrichtung, speichern. Herkömmlicherweise muss jedoch zur Transferierung der Daten das Unterwasserfahrzeug aus dem Wasser geborgen und anschließend sein Unterwasserdruckkörper geöffnet werden. Sodann muss die im Inneren des Unterwasserdruckkörpers angeordnete und mit der Recheneinheit verbundene Massenspeichervorrichtung von dem Unterwasserfahrzeug getrennt werden, damit die Massenspeichervorrichtung weitergegeben werden kann. Die Daten werden auf diese Weise durch Weitergeben der Massenspeichervorrichtung transferiert. Um den Unterwasserdruckkörper erneut nutzen zu können, wird eine weitere Massenspeichervorrichtung in seinem Inneren mit der Recheneinheit verbunden. Der Unterwasserdruckkörper wird druckfest und wasserundurchlässig wiederverschlossen, um die Massenspeichervorrichtung und die Recheneinheit vor eindringendem Wasser und somit vor einem elektrischen Kurzschluss und etwaigen sonstigen Beschädigungen durch (See-)Wasser zu schützen.

Diese bekannte Vorrichtung hat den Nachteil, dass das Transferieren der Daten aufgrund des Öffnens und des wasserdichten Wiederverschließens des druckfesten Unterwasserdruckkörpers einen hohen zeitlichen Aufwand benötigt.

Im Stand der Technik ist in US2005/0057849 A1 eine Massenspeichervorrichtung beschrieben, die ein Massenspeichermodul, insbesondere eine elektromechanische Festplatte, im Inneren seines hermetisch verschlossenen Gehäuses aufweist. Das Gehäuse weist zudem in seinem Inneren ein Volumen mit Luft unter normalen Druck auf. Daten dieser Massenspeichervorrichtung sind über eine Nachrichtenleitung oder über Funkwellen zu einer Recheneinheit transferierbar, wobei die Massenspeichervorrichtung und die Recheneinheit sich im Inneren eines weiteren Körpers befinden. Der Körper ist nicht als druckfester Körper ausgebildet. Diese bekannte Massenspeichervorrichtung hat den Nachteil, dass der Körpers unter einen beachtlichen zeitlichen Aufwand zur Entnahme der Massenspeichervorrichtung zu öffnen ist.

Alternativ werden in US2005/0057849 A1 die Daten der Massenspeichervorrichtung per Funk transferiert. Hierfür weist die Massenspeichervorrichtung eine Antenne auf. Mittels der Antenne werden die Daten per Funk gesendet und mittels einer in der Umgebung der Antenne befindlichen Empfangsantenne, die mit einer weiteren Recheneinheit verbunden ist, Daten empfangen.

Diese bekannte Vorrichtung hat den Nachteil, dass eine Zeitspanne zur Transferierung von Daten, nachfolgend als Transferierungsdauer bezeichnet, von Übertragungseigenschaften der verwendeten Funksysteme sowie von der Anzahl und Größe der zu übertragenden Daten der Massenspeichervorrichtung abhängt.

Die JP 2007 028 188 A offenbart ein Kamerasystem mit einer Kamera an welcher eine kabellose Kommunikationseinheit angefügt ist, zugehörig ist eine wasserdichte Schutzeinrichtung, in welcher die Kamera aufnehmbar ist und ein Speicher, welcher einen Intraspeicherdatenverarbeitungsschaltkreis aufweist, wobei an dem wasserdichten Schutz lösbar anbringbar ein wasserdichte Kamerazusatzteilschutzeinheit angeordnet ist und zwischen dem wasserdichten Kamerazusatzteilschutz ein wasserdichter Schutz gebildet werden kann.

Weiterhin offenbart die US 7,296,345 B1 ein tragbares Speichermedium mit einem abgedichteten Gehäuse und einer bedruckten Schaltkreiskartenanordnung, welche durch das Gehäuse eingeschlossen wird, sodass ein Steckeranschluss an einem Ende herausragt.

Der US 2006/0005759 A1 kann ein Unterwassergefährt entnommen werden, welches einen langgestreckten Körper enthält, welcher durch einen longitudinalen Kanal definiert wird und welches ein wasserdichtes Interieur mit einem arbeitsfähigen Prozessor aufweist, welcher mit einem Speicher des Interieurs verbunden ist, einem Lasthalter in dem Kanal für das lösbare Sichern einer Last und einen Kommunikationsport, welcher betriebsfähig mit dem Prozessor verbunden ist und welcher lösbar mit der Last, welche von dem Lasthalter getragen wird, verbunden wird.

Zudem offenbart die JP 2001 251 543 A eine digitale Kamera, ein Schutz, ein Fenster und Betätigungseinrichtung, welche wasserdichte Eigenschaften aufweist. Die digitale Kamera weist eine Linse, einen Auslöseknopf, einen optischen Finder und einen Blitz auf. Ein wasserdichter Verbinder zum Anschließen der Batterie ist ebenfalls mit umfasst. Zudem umfasst ein Batteriefach wasserdichte Eigenschaften.

Weiterhin offenbart die US 2006/0220201 A1 eine Struktur und ein Verfahren für eine Speicherkarte, aufweisend ein Schaltungssubstrat und ein gekapseltes Gehäuse. Das Schaltungssubstrat ist vollständig mit Speicherbausteinen und Leiterbahnen verbunden, wobei am Umfang Erhöhungen und Vertiefungen aufgedruckt sind.

Der JP 2006 251 225 A kann eine Fotografiereinrichtung entnommen werden, deren Linse unter Wasser oder in Umgebung mit großer Luftfeuchtigkeit ausgetauscht werden kann.

Der Erfindung liegt nach alledem das Problem zugrunde, eine Vorrichtung zur Transferierung von Daten von oder zu einem Unterwasserdruckkörper bereitzustellen, um die Transferierungszeit zu verkürzen.

Die Erfindung löst dieses Problem durch eine Vorrichtung gemäß Anspruch 1, bei dem insbesondere die Massenspeichervorrichtung einen druckfesten, wasserundurchlässigen und luftleeren Isolationskörper aufweist. Ferner ist die Massenspeichervorrichtung mit einer an der Außenseite des Unterwasserkörpers angeordneten Verbindungsvorrichtung lösbar verbindbar.

Das der Erfindung zugrundeliegende Problem wird ferner gelöst durch ein Verfahren zum Transferieren von Daten gemäß Anspruch 9, bei dem insbesondere die Massenspeichervorrichtung mit einer an der Außenseite des Unterwasserdruckkörpers angeordneten Verbindungsvorrichtung der Recheneinheit des Unterwasserdruckkörpers lösbar verbunden wird und die Daten durch Weitergeben der lösbar verbundenen Massenspeichervorrichtung von der Recheneinheit des Unterwasserdruckkörpers zu der weiteren Recheneinheit transferiert werden.

Der Erfindung liegt die Erkenntnis zugrunde, dass die Massenspeichervorrichtung nicht notwendiger Weise im Inneren eines Unterwasserdruckkörpers angeordnet sein muss, sondern dass eine Anordnung der Massenspeichervorrichtung an der Außenseite des Unterwasserdruckkörpers möglich ist, wenn die Massenspeichervorrichtung zusätzlich einen Isolationskörper gegen Wasser und Druck aufweist. Hierzu sieht die Erfindung eine den Isolationskörper aufweisende Massenspeichervorrichtung vor, die derart ausgebildet ist, um mit einer Verbindungsvorrichtung am Unterwasserdruckkörpers lösbar verbunden zu werden. Vorteilhafterweise ist somit nur die Massenspeichervorrichtung von der Verbindungsvorrichtung zu trennen. Auf diese Weise sind weitere Bestandteile des Unterwasserdruckkörpers nicht zu öffnen, zu lösen und/oder zu trennen, um die Massenspeichervorrichtung zu entnehmen.

Vorteilhafterweise isoliert der Isolationskörper die elektrischen Bauteile der Massenspeichervorrichtung vor umgebenden Druck und umgebenden Wasser. Erfindungsgemäß weist der Isolationskörper kein Volumen mit Luft auf bzw. schließt kein Volumen mit Luft oder einen Hohlraum ein, da Luft unter Wasser zum Einen Auftrieb bewirkt und zum Anderen eine aufwendigere Konstruktion des Isolationskörpers zur Folge hat, damit Druckfestigkeit auch in großen Tauchtiefen gegeben ist. Mittels des Isolationskörpers ist die Massenspeichervorrichtung sowohl innerhalb als auch außerhalb des Unterwasserdruckkörpers funktionsfähig, d.h. Daten sind auf der Massenspeichervorrichtung lesbar und/oder schreibbar. Durch den Isolationskörper ergibt sich die Möglichkeit, während einer Mission in hohen Tauchtiefen, z.B. in üblichen Tauchtiefen von Tiefsee-U-Booten von mehreren 1000 m, Daten, z.B. von Sensoren am Unterwasserdruckkörper, auf oder von der Massenspeichervorrichtung zu transferieren.

Erfindungsgemäß werden Daten der Massenspeichervorrichtung durch Weitergeben der getrennten Massenspeichervorrichtung transferiert. Auf diese Weise sind Daten der Massenspeichervorrichtung unabhängig von der Anzahl und Größe der Daten in kürzerer Transferierungsdauer transferierbar als es bisher mit herkömmlichen Vorrichtungen mittels Funkübertragung oder leitungsgebundener Übertragung von oder zu dem Unterwasserdruckkörper der Fall ist, insbesondere bei großen Datenmengen wie bspw. Daten mit einer Gesamtgröße von über einem Gigabyte.

Bei einer bevorzugten Ausführungsform weist die Massenspeichervorrichtung mindestens zwei Bauelemente auf, nämlich ein Massenspeicherbauelement und ein druckbeständiges, wasserundurchlässiges und lösbares Verbindungselement, das nachfolgend als Unterwasserverbindungselement bezeichnet wird. Zudem ist das Massenspeicherbauelement mit dem Unterwasserverbindungselement über eine interne Verbindung verbunden.

Das Massenspeicherbauelement ist vorteilhafterweise ein handelsübliches und somit kostengünstiges Massenspeicherbauelement. Erfindungsgemäß ist das Massenspeicherbauelement nicht nur auf Halbleiterbauelemente beschränkt, sondern umfasst auch Massenspeichermodule, insbesondere einen USB Flash-Massenspeicher. Die Massenspeichermodule weisen nicht nur das Massenspeicherbauelement sondern auch weitere Bauelemente auf, die für den Betrieb der Massenspeicherbauelemente notwendig sind. Insbesondere weist das Massenspeichermodul eine Spannungsstabilisierung und/oder ein Schnittstellenkonvertierungsbauelement auf.

Vorteilhafterweise ist das Unterwasserverbindungselement wasserundurchlässig. Daher werden externe Kontakte des Unterwasserverbindungselements bei bestehender Verbindung zu einem weiteren Unterwasserverbindungselements unter Wasser nicht elektrisch kurzgeschlossen. Ferner ist das Unterwasserverbindungselement druckbeständig. Auf diese Weise ist trotz des zur Tiefe proportionalen höheren Wasserdrucks eine kurzschlussfreie Übertragung von zwei miteinander verbundenen Unterwasserverbindungselementen gegeben.

Das Massenspeicherbauelement und das Unterwasserverbindungselement sind über die interne Verbindung miteinander verbunden. Auf diese Weise sind die Kontakte des Massenspeicherbauelements, nachfolgend als Massenspeicherbauelementskontakte bezeichnet, über die interne Verbindung und über die internen Kontakte des Unterwasserverbindungselements nach außen zu den externen Kontakten des Unterwasserverbindungselements geführt.

Vorteilhafterweise ist die interne Verbindung mit den internen Kontakten des Unterwasserverbindungselements und/oder mit Massenspeicherbauelementskontakten dauerhaft elektrisch leitend, insbesondere mittels Löten oder Lasern, verbunden. Auf diese Weise ist eine nichtlösbare und daher druckrobustere Verbindung zwischen dem Massenspeicherbauelement und dem Unterwasserverbindungselement herstellbar.

Bei einer speziellen Ausführungsform ist das Massenspeicherbauelement als Massenspeichermodul ausgebildet. Dieses Massenspeichermodul, insbesondere ein Flash-Massenspeicher mit USB-Stecker, ist mittels seiner leitenden Kontakte mit einer zu dem Massenspeichermodul kompatiblen Fassungsvorrichtung, insbesondere mit einer USB-Buchse, verbunden. Die Fassungsvorrichtung ist dauerhaft über die interne Verbindung mit den internen Kontakten des Unterwasserverbindungselements verbunden. Indem das Massenspeichermodul mit der Fassungsvorrichtung verbunden wird, ist mittels der internen Verbindung eine Verbindung zu den externen Kontakten des Unterwasserverbindungselements gegeben. Somit sind Daten über die externen Kontakte des Unterwasserverbindungselements lesbar und/oder schreibbar. Auf diese Weise kann vorteilhaft ein herkömmliches Massenspeichermodul in der Massenspeichervorrichtung verwendet werden.

Bei einer weiteren besonderen Ausführungsform der Erfindung ist der Isolationskörper derart ausgebildet, um Kontakte des Unterwasserverbindungselements mit Ausnahme externer Kontakte des Unterwasserverbindungselements, die interne Verbindung und weitere Bauelemente mittels Silikonen, Kunststoffen, Kunstharzen, insbesondere vergossenem Polyurethan, und/oder alternativen elektrisch nicht leitenden druckfesten, wasserundurchlässigen und luftfreien Vergussmassen kurzschlussfrei, druckfest, wasserundurchlässig, luftleer und nicht lösbar zu isolieren.

Vorteilhafterweise ist der Isolationskörper ein mittels nicht leitenden druckfesten, wasserundurchlässigen und luftfreien Vergussmassen anzufertigendes Gehäuse, das ausschließlich die elektrisch leitenden Kontakte, Leitungen und Bauelemente vor umgebenden Druck und elektrisch leitendem Wasser isoliert. Auf diese Weise ist die Massenspeichervorrichtung bezüglich der äußeren Form beliebig gestaltbar. Vorteilhafterweise weist der Isolationskörper nebst dem Unterwasserverbindungselement eine strömungsgünstige, d.h. den Strömungswiderstand minimierende, und/oder bautechnisch optimale, d.h. das Gewicht und die Größe reduzierende, äußere Form auf.

Vorteilhafterweise umhüllt der Isolationskörper das Massenspeicherbauelement, um das Massenspeicherbauelement vor umgebenden Druck zu schützen. Erfindungsgemäß ist das Umhüllen nicht auf das Massenspeicherbauelement beschränkt, sondern ist bis auf die externen Kontakte des Unterwasserverbindungselements auf beliebige Bestandteile, insbesondere Bauteile, der Massenspeichervorrichtung erweiterbar. Umhüllen bedeutet hier, den Einschluss ohne Hohlraum, z.B. durch Vergießen mit der Vergussmasse. Hierbei kann dann auf ein zusätzliches druckfestes Gehäuse verzichtet werden, d'a der Isolationskörper selbst bei hohem Druck durch den hohlraumfreien Verguss nicht unter dem hohen Druck kollabiert oder implodiert.

Die Vorrichtung der Erfindung weist ein Schalterbauelement auf, insbesondere einen Magnetschalter, wobei das Schalterbauelement derart ausgebildet ist, um die interne Verbindung zwischen den externen Kontakten des Unterwasserverbindungselements und den Massenspeicherbauelementskontakten schaltbar zu verbinden. Dies ist vorteilhaft, da das Massenspeicherbauelement durch Trennen oder Verbinden der elektrisch leitenden Verbindung zwischen der Massenspeichervorrichtung und der Verbindungsvorrichtung kurzschlussfrei durchführbar ist. Erfindungsgemäß ist das Trennen und Verbinden der elektrisch leitenden Verbindung nicht nur auf mechanisches Trennen oder Verbinden einer oder mehrerer Leitungen der Verbindung beschränkt, sondern umfasst vielmehr das elektrische Trennen und Verbinden der Verbindung, insbesondere mittels Transistoren.

Weist die Massenspeichervorrichtung Energiespeicher wie bspw. Kondensatoren oder Energiequellen, insbesondere Batterien, auf, sind die stromführenden externen Kontakte des Unterwasserverbindungselements mittels des Schalterbauelements derart schaltbar, dass ein Strom nicht über die externen Kontakte des Unterwasserverbindungselements fließen kann.

Bei einer speziellen Ausführungsform der Massenspeichervorrichtung ist das Schalterbauelement ein Magnetschalter, der als Hall-Schalter ausgebildet ist. Dies ist vorteilhaft, da der Schaltzustand durch ein im Bereich des Hall-Schalters befindliches Magnetfeld schaltbar ist. Vorteilhafterweise ist im Bereich der Verbindungsvorrichtung ein Dauermagnet vorgesehen, mit dessen Magnetfeld in einem bestimmten Bereich des Schalterbauelements das Schalterbauelement der Massenspeichervorrichtung schaltbar ist. Durch mechanisches Verbinden der Massenspeichervorrichtung mit der Verbindungsvorrichtung wird das Schalterbauelement in dem bestimmten schalterauslösenden Bereich angeordnet. Bevorzugterweise ist der bestimmte schalterauslösende Bereich erreicht, sobald die mechanische Verbindung bzgl. der elektrisch leitenden Kontakte wasserundurchlässig ist. Hierdurch bedarf der Isolationskörper in dem Bereich des Hall-Schalters keinerlei Anpassungen, die bspw. bei mechanisch ausgelösten Schaltern nötig wären.

Alternativ ist das Schalterbauelement ein Magnetschalter, der als Reed-Relais ausgebildet ist, das mittels der Recheneinheit des Unterwasserdruckkörpers, nachfolgend als Unterwasserrecheneinheit bezeichnet, geschaltet wird. Auf diese Weise werden die stromführenden externen Kontakte der Massenspeichervorrichtung mittels der Unterwasserrecheneinheit geschaltet. Dies ist vorteilhaft, falls eine Steuerverbindung von einem Kontrollzentrum zu der Unterwasserrecheneinheit besteht, da diese neben anderen Sensoren und/oder anderen Einrichtungen des Unterwasserdruckkörpers ebenfalls den Schalter der Massenspeichervorrichtung steuern kann. Mittels des Kontrollzentrums ist das Schalterbauelement somit ferngesteuert schaltbar.

Bei einer bevorzugten Ausführungsform der erfindungsgemäßen Vorrichtung weist die Vorrichtung die Massenspeichervorrichtung, die Verbindungsvorrichtung, den Unterwasserdruckkörpers sowie eine Verbindung zwischen der Unterwasserrecheneinheit und der Verbindungsvorrichtung am Unterwasserdruckkörper auf. Die Verbindung zwischen der Unterwasserrecheneinheit und der Verbindungsvorrichtung am Unterwasserdruckkörper weist zudem ein weiteres Schalterbauelement auf, das nachfolgend als Verbindungsvorrichtungsschalter bezeichnet wird, auf. Der Verbindungsvorrichtungsschalter schaltet ein oder mehrere zu der Verbindungsvorrichtung führende Leitungen. Die Leitungen sind insbesondere Stromleitungen einer Stromversorgung für die Massenspeichervorrichtung und/oder Nachrichtenleitungen zwischen der Unterwasserrecheneinheit und der Verbindungsvorrichtung. Vor dem Trennen der Verbindung zwischen der Massenspeichervorrichtung und der Verbindungsvorrichtung ist der Verbindungsvorrichtungsschalter und/oder das Schalterbauelement der Massenspeichervorrichtung schaltbar, insbesondere trennbar, um einen Kurzschluss an den elektrischen Kontakten der Massenspeichervorrichtung und/oder an den elektrischen Kontakten der Verbindungsvorrichtung zu verhindern.

Bevorzugterweise weist die Massenspeichervorrichtung einen Dauermagneten auf, mit dem der Verbindungsvorrichtungsschalter schaltbar ist.

Alternativ ist das Schalterbauelement und/oder der Verbindungsvorrichtungsschalter als mechanischer Schalter ausgebildet. Hierdurch ist ein Kurzschluss ebenfalls zu verhindern.

Bei einer weiteren besonderen Ausführungsform weisen die Massenspeichervorrichtung und die Verbindungsvorrichtung am Unterwasserdruckkörper zueinander komplementäre, druckbeständige, wasserundurchlässige und lösbare Verbindungselemente, insbesondere ein Stecker-Buchsen-Paar, auf, die derart ausgebildet sind, um elektrische und/oder optische Signale zwischen der Massenspeichervorrichtung und der Unterwasserrecheneinheit zu übertragen.

Durch komplementäre Verbindungselemente wie bspw. einem Stecker-Buchsen-Paar ist vorteilhafterweise zumindest eine mechanische Verbindung zwischen der Massenspeichervorrichtung und der Verbindungsvorrichtung am Unterwasserdruckkörper gegeben. Über die miteinander mechanisch verbundenen Verbindungselemente sind zudem elektrische und/oder optische Signale für einen Datentransfer übertragbar. Auf diese Weise sind die miteinander mechanisch verbundenen Verbindungselemente zudem elektrisch leitend und/oder optisch leitend verbunden. Darüber hinaus kann bspw. auch die Stromversorgung der Massenspeichervorrichtung mittels der Verbindungsvorrichtung bereitgestellt werden, wenn dies erforderlich sein sollte.

Vorteilhafterweise sind die miteinander verbundenen Verbindungselemente druckbeständig und wasserundurchlässig, damit die elektrischen Signale unter Wasser, insbesondere bei Unterwassertiefen größer als 50 Meter, durch eindringendes Wasser nicht kurzgeschlossen werden.

Mittels der Verbindungsvorrichtung ist die Massenspeichervorrichtung durch Trennen oder Verbinden von bzw. mit der Recheneinheit im Inneren des Unterwasserdruckkörpers, nämlich der Unterwasserrecheneinheit, verbindbar. Vorteilhafterweise ist die Unterwasserrecheneinheit somit nicht an der Außenseite des Unterwasserdruckkörpers angeordnet, sondern im Inneren des Unterwasserdruckkörpers. Daher bedarf die Recheneinheit keines Isolationskörpers gegen umgebendes Wasser, mechanische Stöße und Druckkräfte, die aufgrund differentieller Druckverhältnisse innerhalb und außerhalb der Recheneinheit entstehen.

Bei einer speziellen Ausführungsförm ist die Verbindung zwischen der Verbindungsvorrichtung und der Unterwasserrecheneinheit, nachfolgend als Nachrichtenverbindung bezeichnet, temporär oder dauerhaft verbunden. Dies ist vorteilhaft, da die Nachrichtenverbindung nur benötigt wird, falls ein Datenzugriff von der Unterwasserrecheneinheit auf die Massenspeichervorrichtung erfolgt. Der Datenzugriff ist beim Lesen und/oder Schreiben der Daten der Massenspeichervorrichtung gegeben. Die Nachrichtenverbindung ist mittels elektrisch und/oder optisch leitenden Nachrichtenleitungen herstellbar. Ein elektrischer Kurzschluss der Nachrichtenleitungen während des Trennens oder nach dem Trennen der Massenspeichervorrichtung von der Verbindungsvorrichtung ist vermeidbar, indem der Datenzugriff gestoppt wird oder die Nachrichtenleitungen getrennt werden. Auf diese Weise liegt eine elektrische Spannung an der Verbindungsvorrichtung nicht mehr an und die Massenspeichervorrichtung ist trotz umgebendem elektrisch leitenden Wassers kurzschlussfrei trennbar oder verbindbar.

Bei einer besonderen Ausführungsform ist der die Massenspeichervorrichtung und die Verbindungsvorrichtung aufweisende Unterwasserdruckkörper als Unterwasserfahrzeug, insbesondere als unbemanntes, ferngesteuertes oder autonom agierendes Unterwasserfahrzeug, ausgebildet. Die Ausbildung des Unterwasserdruckkörpers als Unterwasserfahrzeug hat den Vorteil, dass die Massenspeichervorrichtung zu einem Austauschort transportierbar ist. Der Austauschort kann im Bereich eines Überwasserfahrzeugs, insbesondere eines Schiffs, Unterwasserfahrzeugs, insbesondere eines U-Boots, oder einer vorbestimmten Position über oder unter Wasser sein. An dem Austauschort ist die Massenspeichervorrichtung von dem die Verbindungsvorrichtung aufweisendem Unterwasserfahrzeug trennbar bzw. verbindbar. Nach Trennen sind die Daten der Massenspeichervorrichtung durch Übergeben der Massenspeichervorrichtung an eine weitere Recheneinheit transferierbar. Dank der Ausbildung des Unterwasserdruckkörpers als Unterwasserfahrzeug ist die Entfernung zu der weiteren Recheneinheit verkürzbar. Der kürzere Abstand zur weiteren Recheneinheit verringert die Transferierungsdauer von der Unterwasserrecheneinheit zur weiteren Recheneinheit aufgrund eines verkürzten Transportweges während der Weitergabe der Massenspeichervorrichtung.

In einer bevorzugten Ausführungsform der Erfindung ist das Unterwasserfahrzeug als autonom agierendes Unterwasserfahrzeug ausgebildet. Das autonom agierende Unterwasserfahrzeug wird üblicherweise als "Autonomous Underwater Vehicle", nachfolgend mit AUV abgekürzt, bezeichnet. Das AUV ist eine weitere Ausbildung des Unterwasserdruckkörpers, das zusätzlich mindestens eine Antriebseinheit und/oder Rudereinheit aufweist. Vorteilhafterweise ist mittels der Antriebseinheit und/oder Rudereinheit der Austauschort autonom erreichbar, um die Massenspeichervorrichtung bereits unter Wasser oder unmittelbar nach Bergung der AUVs über Wasser zu entnehmen und anschließend weiterzugeben.

Bei einer weiteren besonderen Ausführungsform umfasst der Unterwasserdruckkörper an seiner Außenseite eine Strömungsvorrichtung, insbesondere eine Strömungskappe oder ein Strömungsschild, die derart ausgebildet ist, um den Strömungswiderstand der Verbindungsvorrichtung und/oder der Massenspeichervorrichtung zu minimieren. Auf diese Weise sind Wasserverwirbelungen, die aufgrund der an der Außenseite des Unterwasserdruckkörpers angeordneten Verbindungsvorrichtung und/oder Massenspeichervorrichtung entstehen, vermeidbar oder zumindest minimierbar.

Bei einer weiteren speziellen Ausführungsform ist der Unterwasserdruckkörper als Unterwasserfahrzeug ausgebildet, das die Strömungskappe aufweist. Bei einer Fahrt des Unterwasserfahrzeugs werden Wasserströmungen an dem Unterwasserfahrzeug erzeugt. Die Wasserströmung resultiert bei harten Abrisskanten, wie bspw. der Massenspeichervorrichtung, in turbulenten Wasserströmungen. Die turbulenten Wasserströmungen erhöhen den Wasserwiderstand, gegen den das Unterwasserfahrzeug mit erhöhtem Energieaufwand anfährt. Dank der Strömungsvorrichtung ist der Strömungswiderstand der an der Außenseite des Unterwasserfahrzeugs angebrachten Verbindungsvorrichtung und/oder Massenspeichervorrichtung kompensierbar und somit vorteilhafterweise der Energieaufwand für die Fahrt des Unterwasserfahrzeugs reduzierbar.

Alternativ ist die Strömungsvorrichtung als Strömungsschild, insbesondere als klappbares Strömungsschild, ausgebildet. Mittels des aufgeklappten Strömungsschildes ist bei dem die Massenspeichervorrichtung aufweisenden Unterwasserdruckkörper der Strömungswiderstand minimierbar. Falls die Massenspeichervorrichtung nicht mit der Verbindungsvorrichtung verbunden ist, ist das Strömungsschild einklappbar. Das eingeklappte Strömungsschild kann derart nahe im Bereich der Außenseite des Unterwasserdruckkörpers angeordnet werden, dass kein bzw. ein nur sehr geringer Strömungswiderstand durch das Strömungsschild entsteht. Auf diese Weise ist der Strömungswiderstand des Strömungsschildes abhängig von einem Vorhandensein der Massenspeichervorrichtung an der Außenseite des Unterwasserdruckkörpers minimierbar.

Bei einer weiteren besonderen Ausführungsform ist die Massenspeichervorrichtung im Wirkungsbereich der Strömungsvorrichtung und im Bereich der Außenseite des Unterwasserdruckkörpers angeordnet. Der Wirkungsbereich der Strömungsvorrichtung ist im Folgenden als der Bereich gekennzeichnet, in dem die Strömung des Wassers verändert wird. Daher ist die Massenspeichervorrichtung im strömungsgeschützten Bereich des Strömungsschildes angeordnet. Ist die Strömungsvorrichtung als Strömungskappe ausgebildet, so ist die Massenspeichervorrichtung unterhalb der Strömungskappe angeordnet. Auf diese Weise ist die Massenspeichervorrichtung vor Kräften, die aufgrund der Strömung entstehen, geschützt. Die auf die Massenspeichervorrichtung einwirkenden Kräfte könnten die Massenspeichervorrichtung deformieren und/oder die Verbindung zwischen der Verbindungsvorrichtung am Unterwasserdruckkörper und der Massenspeichervorrichtung zeitweise oder dauerhaft trennen. Vorteilhafterweise benötigt die Massenspeichervorrichtung bei dieser besonderen Ausführungsform daher keine nach hydrodynamischen Aspekten angepasste äußere Form, um gegen den Strömungswiderstand zu bestehen.

Bei einer weiteren besonderen Ausführungsform der Erfindung weist die erfindungsgemäße Vorrichtung die Massenspeichervorrichtung, die Verbindungsvorrichtung, die Unterwasserrecheneinheit, die Nachrichtenleitung, den Unterwasserdruckkörper sowie mindestens eine, insbesondere zwei, an dem Unterwasserdruckkörper angeordneten Antennen auf. Erfindungsgemäß sind die Antennen mit der Unterwasserrecheneinheit verbunden. Die Unterwasserrecheneinheit weist erfindungsgemäß eine Verbindung zu den Antennen und zu der Massenspeichervorrichtung auf. Mittels der Antennen ist eine Nachrichtenverbindung zwischen der Unterwasserrecheneinheit und einem Kontrollzentrum herstellbar. Das Kontrollzentrum kann auf diese Weise mittels der Unterwasserrecheneinheit die Anzahl und Größe der Daten der Massenspeichervorrichtung feststellen. Dies ist vorteilhaft, um vor Transferierung der Daten der Massenspeichervorrichtung abzuschätzen, ob die Transferierungsdauer mittels einer Funkübertragung oder durch Weitergeben der Massenspeichervorrichtung geringer ist.

Bei einer speziellen Ausführungsform der Erfindung weist die Vorrichtung ferner die Strömungsvorrichtung auf. Die Antennen sind im Wirkungsbereich der Strömungsvorrichtung angeordnet. Dank der Anordnung der Antennen im Wirkungsbereich der Strömungsvorrichtung sind die Antennen vor Kräften, die aufgrund der Strömung entstehen, geschützt.

Bei einer weiteren speziellen Ausführungsform der Erfindung weist die Vorrichtung ferner die Schalter auf, nämlich den Verbindungsvorrichtungsschalter und/oder das Schalterbauelement der Massenspeichervorrichtung. Vorteilhafterweise sind die Schalter mittels der Unterwasserrecheneinheit schaltbar, indem ein Schaltbefehl von dem Kontrollzentrum mittels der Antennen empfangen wird. Auf diese Weise ist das Kontrollzentrum in der Lage das elektrische Trennen der Massenspeichervorrichtung vorzubereiten und somit die Zeit zum Transferieren der Daten zu verkürzen. Vorteilhafterweise muss das elektrische Trennen nicht unmittelbar vor dem mechanischen Trennen erfolgen.

In einer bevorzugten Ausführungsform der Erfindung weist die erfindungsgemäße Vorrichtung mindestens zwei der Antennen auf. Mittels der zwei Antennen ist eine höhere und/oder fehlerfreiere Datentransferierung, nachfolgend als Übertragungsgewinn bezeichnet, als mit nur einer Antenne gegeben. Das Empfangen von elektromagnetischen Wellen mittels zwei oder mehrerer Antennen ermöglicht den Übertragungsgewinn mittels mehrerer Übertragungskanäle und/oder mittels paralleler Datenströme. Die gesendeten und/oder empfangenen Daten mittels zwei oder mehrerer Antennen weisen eine Vielfältigkeit, die üblicherweise als Diversität bezeichnet wird, in mindestens einer der folgenden Bereiche auf: Zeitdiversität, Frequenzdiversität, räumliche Diversität (spatial diversity) und/oder Polarisationsdiversität. Vorteilhafterweise ist die Fehlerwahrscheinlichkeit des Datentransfers mittels der zwei Antennen im Vergleich zum Empfang mittels der einen Antenne besonders bei geringem Signal- zu Störverhältnis ebenfalls kleiner. Auf diese Weise ist erfindungsgemäß eine fehlerreduzierte Transferierung der Daten und/oder fehlerreduzierte Informationen über Anzahl und Größe der Daten der Massenspeichervorrichtung abhängig von der Anzahl der Antennen sichergestellt.

Bei einer weiteren besonderen Ausführungsform des erfindungsgemäßen Verfahrens wird die Massenspeichervorrichtung unter Wasser oder über Wasser, nass oder trocken mittels der das Schalterbauelement aufweisenden Massenspeichervorrichtung kurzschlussfrei zum Transferieren der Daten durch Weitergeben der Massenspeichervorrichtung verbunden oder getrennt. Hierdurch ist ein Verbringen des Unterwasserdruckkörpers weder über Wasser noch eine trockene Verbindungsvorrichtung am Unterwasserdruckkörper notwendig. Erfindungsgemäß wird die benötigte Zeit zum Bergen und/oder Trockenlegen des Unterwasserdruckkörpers bzw. der Verbindungsvorrichtung eingespart. Die Erfindung ist jedoch nicht auf das Verbinden und Trennen der Massenspeichervorrichtung unter Wasser beschränkt. Alternativ kann die Massenspeichervorrichtung auch über Wasser nass oder trocken verbunden oder getrennt werden. Erfindungsgemäß ist die lösbare Verbindung unabhängig von der Witterung, wie bspw. Regen oder Schneefall, und unabhängig von umgebendem Wasser verbindbar oder trennbar.

Bei einer weiteren besonderen Ausführungsform des erfindungsgemäßen Verfahrens wird die Massenspeichervorrichtung zum Transferieren der Daten von der Unterwasserrecheneinheit, nachfolgend als erste Unterwasserrecheneinheit bezeichnet, an die weitere Recheneinheit weitergegeben, die entweder eine beabstandete Zielrecheneinheit zum Lesen oder Schreiben der Daten, insbesondere zum Speichern von Zielpositionsdaten, ist oder die eine beabstandete Recheneinheit eines weiteren Unterwasserdruckkörpers, nachfolgend als zweite Unterwasserrecheneinheit bezeichnet, ist.

Das erfindungsgemäße Verfahren ist nicht nur auf die Weitergabe der Massenspeichervorrichtung von einer ersten Unterwasserrecheneinheit zu einer zweiten Unterwasserrecheneinheit beschränkt, sondern umfasst auch die Weitergabe der Massenspeichervorrichtung von der ersten Unterwasserrecheneinheit zu einer beabstandeten Zielrecheneinheit. Die beabstandete Zielrecheneinheit liest und schreibt Daten, die sich auf der Massenspeichervorrichtung befinden. Dies ist vorteilhaft, da nicht nur Daten bzgl. einer Mission des Unterwasserdruckkörpers gespeichert werden können, sondern auch Daten, die als Programme ausgebildet sind. Programme werden üblicherweise als Software oder Firmware bezeichnet. Auf diese Weise sind Daten bspw. Zielpositionsdaten und/oder Zielfindungsprogramme von der Zielrecheneinheit auf der Massenspeichervorrichtung schreibbar.

Erfindungsgemäß werden die Daten der Massenspeichervorrichtung durch Weitergabe der Massenspeichervorrichtung von der Unterwasserrecheneinheit zu der beabstandeten zweiten Unterwasserrecheneinheit transferiert. Dies erleichtert ein Austauschen einer Unterwasserrecheneinheit und/oder eines Unterwasserrecheneinheit aufweisenden Unterwasserdruckkörpers, da bspw. nicht nur Missionsdaten transferiert werden, sondern jedwede auf der Massenspeichervorrichtung gespeicherten Daten, wie bspw. Programme und/oder Betriebssysteme. Hierdurch ist eine Hardware bedingte, d.h. eine Unterwasserrecheneinheit und/oder Unterwasserdruckkörper bedingte Unterbrechung einer Mission mittels der zweiten Unterwasserrecheneinheit durch Weitergabe der Massenspeichervorrichtung fortführbar. Auf diese Weise sind jedwede der Mission umfassenden Daten, die auf der Massenspeichervorrichtung geschrieben wurden, zu der zweiten Unterwasserrecheneinheit transferierbar.

Bei einer weiteren besonderen Ausführungsform des erfindungsgemäßen Verfahrens werden die Daten der Massenspeichervorrichtung von einer ersten Unterwasserrecheneinheit zu einer zweiten Unterwasserrecheneinheit transferiert, indem die Massenspeichervorrichtung weitergegeben wird. Alternativ wird die Massenspeichervorrichtung weitergeben und anschließend werden die Daten der Massenspeichervorrichtung auf ein oder mehrere weitere Massenspeicherbauelemente oder Massenspeichermodule und/oder ein oder mehrere weitere Massenspeichervorrichtungen kopiert. Das Transferieren der Daten erfolgt nicht nur von der ersten Unterwasserrecheneinheit zu der zweiten Unterwasserrecheneinheit, sondern auch von der ersten Unterwasserrecheneinheit zu einer Zielrecheneinheit, oder von einer Zielrecheneinheit zu der ersten oder der zweiten Unterwasserrecheneinheit. Vorteilhafterweise werden verschiedene Anforderungen bzgl. der Anzahl der Kopien der Daten der Massenspeichervorrichtungen gemäß folgenden Ausführungsformen des erfindungsgemäßen Verfahrens befriedigt.

In einer bevorzugten Ausführungsform des erfindungsgemäßen Verfahrens werden die Daten zwischen nur zwei Recheneinheiten transferiert, indem die Massenspeichervorrichtung weitergegeben wird.

In einer speziellen Ausführungsform des erfindungsgemäßen Verfahrens werden die Daten jedoch zwei- oder mehrfach transferiert. Hierfür werden die Daten der Massenspeichervorrichtung nach Weitergabe der Massenspeichervorrichtung an eine Zielrecheneinheit mittels der Zielrecheneinheit auf ein oder mehrere weitere Massenspeicherbauelemente oder Massenspeichermodule und/oder auf ein oder mehrere weitere Massenspeichervorrichtungen kopiert. Auf diese Weise können die Daten der Massenspeichervorrichtung von der Zielrecheneinheit zu der ersten, der zweiten und/oder zu ein oder mehrere weitere Unterwasserrecheneinheiten durch Weitergabe der Massenspeichervorrichtung transferiert werden. Dies ist vorteilhaft, da die Daten der ersten Unterwasserrecheneinheit als Grundlage für ein oder mehrere weitere Unterwasserrecheneinheiten dienen können.

Weitere bevorzugte Ausführungsformen ergeben sich aus den Unteransprüchen sowie aus den anhand der beigefügten Zeichnung näher erläuterten Ausführungsbeispielen der Erfindung. In der Zeichnung zeigen:
- Fig. 1: eine Draufsicht eines Ausführungsbeispiels einer erfindungsgemäßen Vorrichtung;
- Fig. 2: eine Draufsicht eines weiteren Ausführungsbeispiels der erfindungsgemäßen Vorrichtung;
- Fig. 3: eine Seitenansicht eines weiteren besonderen Ausführungsbeispiels der erfindungsgemäßen Vorrichtung;
- Fig. 4: eine Seitenansicht eines weiteren speziellen Ausführungsbeispiels der erfindungsgemäßen Vorrichtung;
- Fig. 5: ein Flussdiagramm eines erfindungsgemäßen Verfahrens, gemäß dem zwischen mindestens zwei Recheneinheiten Daten transferiert werden.

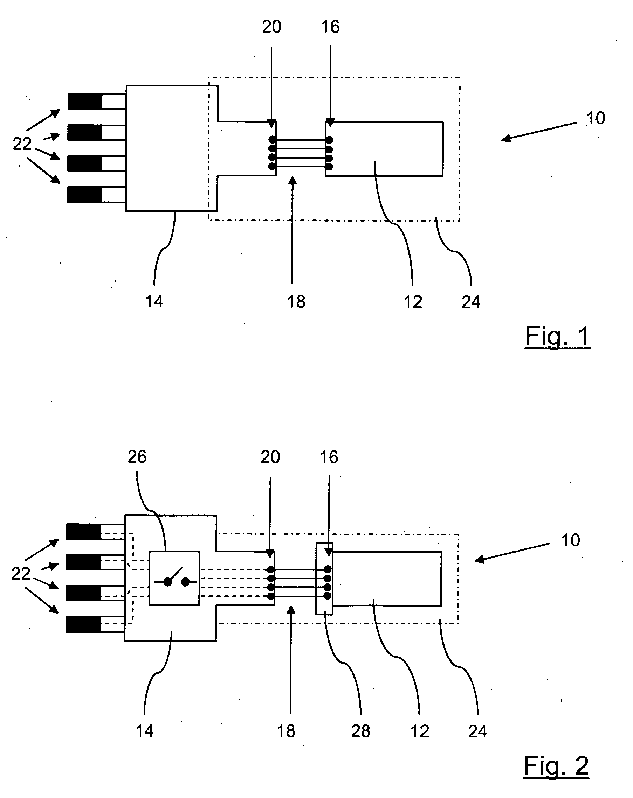

Fig. 1 zeigt eine Draufsicht einer Vorrichtung, die eine Massenspeichervorrichtung 10 umfasst. Die Massenspeichervorrichtung 10 weist mindestens zwei Bauteile auf, nämlich ein Massenspeicherbauelement 12 und ein druckbeständiges wasserundurchlässiges und lösbares Verbindungselement, nachfolgend als Unterwasserverbindungselement 14 bezeichnet. Das Massenspeicherbauelement 12 weist Massenspeicherbauelementkontakte 16 auf. Die Massenspeicherbauelementkontakte 16 sind über eine interne Verbindung 18 mit internen Kontakten des Unterwasserverbindungselements 20 verbunden. Das Unterwasserverbindungselement 14 weist eine Verbindung zwischen den internen Kontakten des Unterwasserverbindungselements 20 und externen Kontakten des Unterwasserverbindungselements 22 auf. Erfindungsgemäß sind die Massenspeicherbauelementkontakte 16 über die interne Verbindung 18 und über das Unterwasserverbindungselement 14 mit den externen Kontakten des Unterwasserverbindungselements 22 verbunden. Auf diese Weise sind mittels den externen Kontakten des Unterwasserverbindungselements 22 Daten des Massenspeicherbauelements 12 und somit Daten der Massenspeichervorrichtung 10 lesbar und/oder schreibbar.

Ferner weist die Massenspeichervorrichtung 10 gemäß Fig. 1 einen Isolationskörper 24 auf. Der Isolationskörper 24 isoliert die Massenspeicherbauelementkontakte 16 und die internen Kontakte des Unterwasserverbindungselements 20. Zudem isoliert der Isolationskörper 24 die interne Verbindung 18, falls die interne Verbindung 18 keine eigene Isolierung außerhalb der an ihren Enden angeordneten elektrisch leitenden Kontakte aufweist. Der Isolationskörper 24 besteht aus Silikon, Kunststoff, Kunstharz, insbesondere vergossenem Polyurethan, oder einer alternativen elektrisch nicht leitenden druckfesten, wasserundurchlässigen und luftfreien Vergussmasse. Zur Herstellung des Isolationskörpers 24 werden also das Massenspeicherbauelement 12, die Massenspeicherbauelementkontakte 16, die internen Kontakte des Unterwasserverbindungselements 20 und die Unterwasserverbindung 18, mit der Vergussmasse vergossen, so dass der Isolationskörper 24 keinen Hohlraum im Inneren aufweist. Auf diese Weise kann das Massenspeicherbauelement 12 vor umgebenden Druck geschützt werden, falls der Isolationskörper 24 des Massenspeicherbauelements 12 vollkommen einhüllt.

Vorteilhafterweise ist der Isolationskörper 24 zudem wasserundurchlässig, damit die Massenspeicherbauelementkontakte 16 nicht miteinander durch elektrisch leitendes, d.h. ionenhaltiges Wasser elektrisch verbunden werden. Ein elektrischer Kurzschluss zwischen den internen Kontakten des Unterwasserverbindungselements 20 aufgrund umgebenden Wassers ist ebenso dank des Isolationskörpers 24 unterbunden. Ferner wird mittels des wasserundurchlässigen Isolationskörpers 24 ein elektrischer Kurzschluss durch elektrisch leitendes Wasser zwischen Massenspeicherbauelementkontakten 16 und den internen Kontakten des Unterwasserverbindungselements 20 verhindert.

Vorteilhafterweise ist der Isolationskörper 24 luftleer und ohne Hohlraum, so dass ein Auftrieb der Massenspeichervorrichtung 10 unter Wasser unterbunden wird. Auf diese Weise ist das lösbare Unterwasserverbindungselement 14 ohne eine weitere Halteverbindung verbindbar.

Fig. 2 zeigt ein Ausführungsbeispiel der erfindungsgemäßen Vorrichtung, die die Massenspeichervorrichtung 10 umfasst. Die Massenspeichervorrichtung 10 weist den Isolationskörper 24 auf, der das Massenspeicherbauelement 12, die interne Verbindung 18 und die internen Kontakte des Unterwasserverbindungselements 20 vor Wasser und Druck isoliert. Erfindungsgemäß isoliert der Isolationskörper 24 zudem ein Schalterbauelement 26. Mittels des Schalterbauelements 26 ist eine Verbindung zwischen den externen Kontakten des Unterwasserverbindungselements 22 und den Massenspeicherbauelementkontakten 16 schaltbar, d.h. diese Verbindung ist trennbar und verbindbar.

Gemäß Fig. 2 ist das Schalterbauelement 26 im Bereich des Unterwasserverbindungselements 14 angeordnet. Die Anordnung des Schalterbauelements 26 im Bereich des Unterwasserverbindungselements 14 ist gemäß der Erfindung nicht beschränkt. Vielmehr sieht die Erfindung eine elektrische Anordnung des Schalterbauelements 26 zwischen den externen Kontakten des Unterwasserverbindungselements 22 und den Massenspeicherbauelementkontakten 16 vor.

Vorteilhafterweise werden mittels des ausgeschalteten Schalterbauelements 26 Energiespeicher und/oder Energiequellen des Massenspeicherbauelements 12, insbesondere Kondensatoren und/oder Batterien, nicht an die externen Kontakte des Unterwasserverbindungselements 22 geleitet. Auf diese Weise ist das Massenspeicherbauelement 12 bei getrennter Verbindung zwischen den externen Kontakten des Unterwasserverbindungselements 22 und den Massenspeicherbauelementkontakten 16 mittels des Schalterbauelements 26 vor Kurzschlüssen an den externen Kontakten des Unterwasserverbindungselements 22 geschützt.

Bei einer speziellen Ausführungsform ist das Schalterbauelement 26 als Magnetschalter, insbesondere als Hall-Schalter, ausgebildet ist. Der Hall-Schalter schaltet, falls in seinem Bereich ein Magnetfeld angeordnet ist. Auf diese Weise ist trotz des einhüllenden Isolationskörpers 24 die Massenspeichervorrichtung 10 kurzschlussfrei lösbar verbindbar.

Bei einer alternativen Ausführungsform ist das Schalterbauelement 26 ein elektromechanisches Relais, das mittels der externen Kontakte des Unterwasserverbindungselements 22 schaltbar ist. Auf diese Weise ist mittels einer an den externen Kontakten angeschlossenen Recheneinheit die Verbindung zwischen den externen Kontakten des Unterwasserverbindungselements 22 und den Massenspeicherbauelementkontakten 16 schaltbar.

Fig. 2 zeigt ferner eine Fassungsvorrichtung 28, die derart ausgebildet ist, um das Massenspeicherbauelement 12 zu verbinden. Mittels der Fassungsvorrichtung 28 ist das Massenspeicherbauelement 12 lösbar verbunden. Dies ist vorteilhaft, da üblicherweise Massenspeichermodule, wie bspw. steckbare USB Flash Massenspeicher, keine nichtlösbaren Verbindungsmöglichkeiten aufweisen. Die Fassungsvorrichtung 28 ist mit der internen Verbindung mittels einer nichtlösbaren Verbindungstechnik, insbesondere Löten, Lasern oder Schweißen, verbindbar. Auf diese Weise sind die Massenspeicherbauelementkontakte 16 mittels der Fassungsvorrichtung 28 mit der internen Verbindung 18 verbindbar. Daher sind auch handelsübliche Massenspeicherbauelemente 12, insbesondere ohne vorgesehene nichtlösbare Verbindungsmöglichkeit, für die erfindungsgemäße Massenspeichervorrichtung 10 verwendbar.

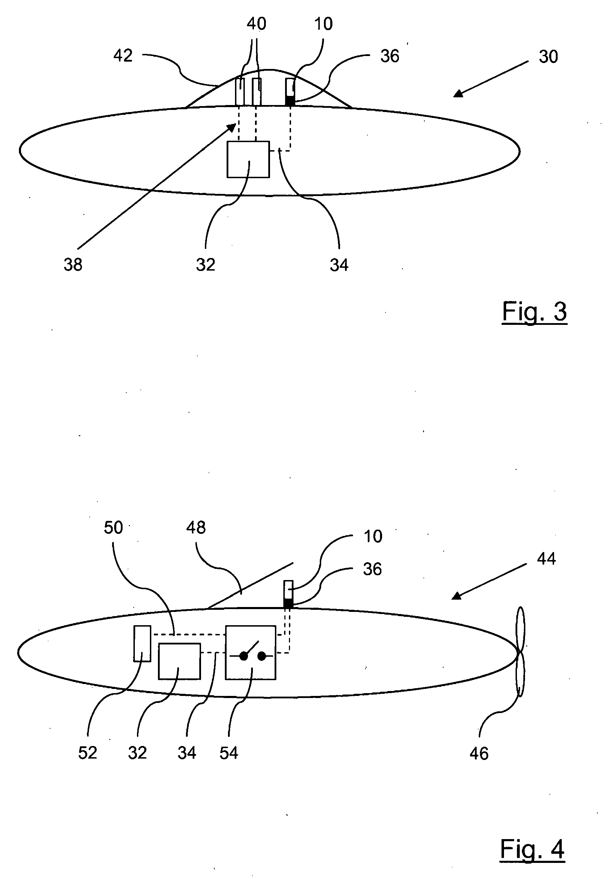

Fig. 3 zeigt die erfindungsgemäße Vorrichtung mit der Massenspeichervorrichtung 10 und einem Unterwasserdruckkörper 30, der in seinem Inneren eine Recheneinheit aufweist, die nachfolgend als Unterwasserrecheneinheit 32 bezeichnet wird. Mittels einer Nachrichtenleitung 34 ist die Unterwasserrecheneinheit 32 mit einer Verbindungsvorrichtung 36 verbunden. Mit der Verbindungsvorrichtung 36 ist die Massenspeichervorrichtung 10 lösbar verbunden. Ferner sind mit der Unterwasserrecheneinheit 32 über Antennenleitungen 38 zwei Antennen 40 verbunden. Erfindungsgemäß überdeckt eine Strömungsvorrichtung, nämlich eine Strömungskappe 42, die Antennen 40, die Massenspeichervorrichtung 10 sowie die Verbindungsvorrichtung 36.

Vorteilhafterweise sind Daten mittels der Unterwasserrecheneinheit 32 über die Nachrichtenleitung 34 und über die Verbindungsvorrichtung 36 auf die Massenspeichervorrichtung 10 lesbar und/oder schreibbar. Daten können daher während einer Mission, also z.B. bei einer Tauchfahrt des Unterwasserdruckkörpers 30, von der Unterwasserrecheneinheit 32 zur Massenspeichervorrichtung 10 und/oder von der Massenspeichervorrichtung 10 zur Unterwasserrecheneinheit 32 auch bei hohen Tauchtiefen übertragen bzw. transferiert werden. Die Daten der Massenspeichervorrichtung 10 sind ferner mittels eines beabstandeten Kontrollzentrums lesbar und/oder schreibbar, indem über die Antennen 40 eine Nachrichtenverbindung von dem Kontrollzentrum zu der Unterwasserrecheneinheit 32 hergestellt wird.

Der Bereich außerhalb des Unterwasserdruckkörpers 30 und unterhalb der Strömungskappe 42 ist mit Wasser flutbar. Daher besteht der gleiche Druck unterhalb der Strömungskappe 42 wie oberhalb der Strömungskappe 42. Die Strömungskappe 42 ist zur Weitergabe der lösbar verbundenen Massenspeichervorrichtung 10 entfernbar. Der Aufwand zum Entfernen der Strömungskappe 42 ist geringer als der Aufwand, die Unterwasserrecheneinheit 32 aus dem Inneren des Unterwasserdruckkörpers 30 zu entfernen. Zumal nach dem Öffnen des Unterwasserdruckkörpers 30 dieser aufwändig wasserdicht und druckfest wiederverschlossen werden muss. Somit ist der zeitliche Aufwand größer, eine Massenspeicher aufweisende Recheneinheit weiterzugeben, die im Inneren des Unterwasserdruckkörpers 30 angeordnet ist, als die Massenspeichervorrichtung 10 weiterzugeben, die an der Außenseite des Unterwasserdruckkörpers 30 angeordnet ist.

Fig. 4 zeigt in einem weiteren Ausführungsbeispiel die erfindungsgemäße Vorrichtung in Seitenansicht. Der Unterwasserdruckkörper 30 ist als ein Unterwasserfahrzeug 44 ausgebildet, das eine Antriebseinheit 46 aufweist. Mit der Antriebseinheit 46 ist das Unterwasserfahrzeug 44 steuerbar, um bspw. eine Wegstrecke abzufahren. Ferner kann das Unterwasserfahrzeug 44 eine Rudereinheit aufweisen, falls mittels der Antriebseinheit 46 die Fahrrichtung nicht steuerbar ist.

Das Unterwasserfahrzeug 44 weist ferner die Strömungsvorrichtung, nämlich ein Strömungsschild 48, auf, das den Strömungswiderstand der an der Außenseite des Unterwasserfahrzeugs 44 angeordneten Massenspeichervorrichtung 10 und/oder Verbindungsvorrichtung 36 reduziert. Vorteilhafterweise wirken die Kräfte des Strömungswiderstandes aufgrund des Strömungsschildes 48 nicht direkt auf die Massenspeichervorrichtung 10 und/oder auf die Verbindungsvorrichtung 36 ein. Trotz der Anordnung der Massenspeichervorrichtung 10 an der Außenseite des Unterwasserfahrzeugs 44 sind dank des Strömungsschildes 48 Daten auf der Massenspeichervorrichtung 10 lesbar und/oder schreibbar. Eine Verbindung zwischen der Massenspeichervorrichtung 10 und der Verbindungsvorrichtung 36 ist wasserundurchlässig und druckfest und derart ausgebildet, damit elektrische und/oder optische Signale insbesondere aufgrund des reduzierbaren Strömungswiderstandes übertragbar sind.

Erfindungsgemäß weist die Unterwasserrecheneinheit 32 über die Nachrichtenleitung 34 eine Verbindung mit der Verbindungsvorrichtung 36 auf. Über die Nachrichtenleitung 34 sind Daten von der Unterwasserrecheneinheit 32 zu der Massenspeichervorrichtung 10 übertragbar. Ferner ist die Massenspeichervorrichtung 10 über die Verbindungsvorrichtung 36 mit Strom versorgbar. Der Strom für die Massenspeichervorrichtung 10 ist über eine Stromleitung 50 von einer Stromversorgung 52 abnehmbar. Gemäß Fig. 4 ist die Stromversorgung 52 im Bereich der Unterwasserrecheneinheit 32 angeordnet.

Die Stromleitung 50, die die Stromversorgung 52 mit der Verbindungsvorrichtung 36 verbindet, ist mittels einem oder mehrerer Verbindungsvorrichtungsschalter 54 schaltbar verbunden. Ebenso ist die Nachrichtenleitung 34, die die Unterwasserrecheneinheit 32 mit der Verbindungsvorrichtung 36 verbindet, mittels des Verbindungsvorrichtungsschalters 54 schaltbar verbunden. Die Nachrichtenleitung 34 und/oder die Stromleitung 50 sind mittels des Verbinduhgsvorrichtungsschalters 54 trennbar. Nach Trennung der Stromleitung 50 und/oder der Nachrichtenleitung 34 sind Kontakte an der Verbindungsvorrichtung 36 elektrisch funktionslos, so dass sie bspw. keinen Kurzschluss verursachen können. Der Strom, der über die Stromleitung 50 sowie über die Nachrichtenleitung 34 fließen kann, wird aufgrund des getrennten Verbindungsvorrichtungsschalters 54 zu der Verbindungsvorrichtung 36 unterbrochen. Daher sind freiliegende Kontakte der Verbindungsvorrichtung 36 trotz des zwischen den Kontakten der Verbindungsvorrichtung 36 befindlichen Wassers dank des Verbindungsvorrichtungsschalters 54 nicht kurzgeschlossen. Somit ist mittels des Verbindungsvorrichtungsschalters 54 die Verbindung zwischen der Verbindungsvorrichtung 36 und der Massenspeichervorrichtung 10 kurzschlussfrei trennbar. Auf diese Weise ist durch die Unterwasserrecheneinheit 32 und mittels des Verbindungsvorrichtungsschalters 54 die elektrische Verbindung zwischen der Verbindungsvorrichtung 36 und der Massenspeichervorrichtung 10 trennbar oder verbindbar.

Bei einer bevorzugten Ausführungsform ist der Verbindungsvorrichtungsschalter 54 im Bereich der Verbindungsvorrichtung 36 angeordnet. Der Verbindungsvorrichtungsschalter 54 ist bspw. als Magnetschalter ausführbar. Der Magnetschalter trennt die Stromleitung 50 und/oder die Nachrichtenleitung 34, falls ein Magnetfeld im Bereich des Magnetschalters einwirkt. Auf diese Weise kann durch Anlegen eines Magnetfeldes im Bereich der Verbindungsvorrichtung 36 ein Stromfluss über die Stromleitung 50 und/oder die Nachrichtenleitung 34 unterbrochen werden. Somit ist der Verbindungsvorrichtungsschalter 54 an der Außenseite des Unterwasserfahrzeugs 44 schaltbar. Dies ist vorteilhaft, da die Massenspeichervorrichtung 10 ebenfalls an der Außenseite des Unterwasserfahrzeugs 44 angeordnet ist. Somit ist vor dem Trennen der Massenspeichervorrichtung 10 mittels eines Magnetfeldes im Bereich der Massenspeichervorrichtung 10 der der Massenspeichervorrichtung 10 zuführbare Strom abschaltbar.

Bei einem besonderen Ausführungsbeispiel weist die erfindungsgemäße Vorrichtung gemäß Fig. 2 die Massenspeichervorrichtung 10 und das Schalterbauelement 26 auf sowie gemäß Fig. 4 den Unterwasserdruckkörper 30 nebst dem Verbindungsvorrichtungsschalter 54 auf. Vorteilhafterweise sind die Schalter der erfindungsgemäßen Vorrichtung, nämlich das Schalterbauelement 26 und/oder der Verbindungsvorrichtungsschalter 54, als Magnetschalter ausgebildet. Auf diese Weise ist ein elektrischer Kurzschluss an den externen Kontakten des Unterwasserverbindungselements 22 oder an den Kontakten der Verbindungsvorrichtung 36 vermeidbar. Hierfür trennen die Magnetschalter je nach Ausführungsform ihre Verbindungen bei anliegendem oder bei nicht anliegendem Magnetfeld.

Bei einem speziellen Ausführungsbeispiel weist der Verbindungsvorrichtungsschalter 54, der als Hall-Schalter ausgebildet ist, einen Dauermagneten in seinem Bereich auf. Der Dauermagnet ist an der Verbindungsvorrichtung und/oder an der Massenspeichervorrichtung anordbar. Auf diese Weise sind die Verbindungen des Hall-Schalters getrennt. Vorzugsweise sind die Kontakte der Verbindungsvorrichtung 36 nicht strom- bzw. spannungsführend, falls keine Massenspeichervorrichtung 10 verbunden ist. Die Massenspeichervorrichtung 10 ist somit mechanisch verbindbar, jedoch ohne elektrisch leitend zu sein. Falls die Massenspeichervorrichtung 10 verbunden wird, befindet sich diese ebenfalls im Bereich des Dauermagneten. Somit trennt das als Hallschalter ausgebildete Schalterbauelement 26 in der Massenspeichervorrichtung 10 seine Verbindung bei anliegendem Magnetfeld. Sobald die Massenspeichervorrichtung 10 mit der Verbindungsvorrichtung 36 verbunden wird, sind beide Schalter, nämlich der Verbindungsvorrichtungsschalter 54 und das Schalterbauelement 26, aufgrund des Dauermagneten in einem eingeschalteten Zustand. Im eingeschalteten Zustand sind die Verbindungen der Schalter getrennt, bzw. der Strom wird nicht geleitet. Durch Entfernen des Dauermagneten aus dem Bereich der Schalter werden beide Schalter in einem ausgeschaltetem Zustand versetzt, bei dem der Strom fließen kann.

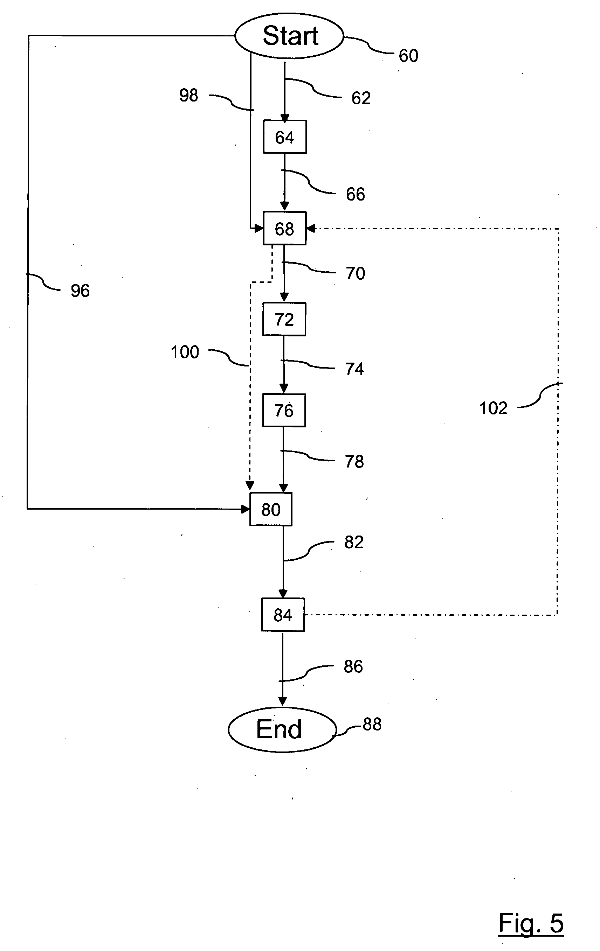

Fig. 5 zeigt ein Flussdiagramm des erfindungsgemäßen Verfahrens an einem Ausführungsbeispiel. Das Verfahren startet an einem Startblock 60. Von dem Startblock 60 erfolgt über einen Zweig 62 ein erster Schreibverfahrensblock 64.

In dem ersten Schreibverfahrensblock 64 wird die Massenspeichervorrichtung 10 mit der Verbindungsvorrichtung 36 verbunden, mittels der Unterwasserrecheneinheit 32, nachfolgend als erste Unterwasserrecheneinheit bezeichnet, Daten geschrieben und anschließend von der Verbindungsvorrichtung 36 wieder getrennt. Nach dem ersten Schreibverfahrensblock 64 erfolgt eine Weitergabe der Massenspeichervorrichtung 10 über den Zweig 66 zu einem ersten Zwischenblock 68.

In dem ersten Zwischenblock 68 weist die Massenspeichervorrichtung 10 somit Daten auf. Die Daten der Massenspeichervorrichtung 10 sind durch Weitergeben der Massenspeichervorrichtung 10 an eine weitere Recheneinheit transferierbar.

Ein Zweig 70 führt von dem ersten Zwischenblocks 68 zu einem Auswertungsblock 72. Über den Zweig 70 wird die Massenspeichervorrichtung 10 von der ersten Unterwasserrecheneinheit zu einer weiteren Recheneinheit, nämlich zu einer Zielrecheneinheit, weitergegeben.

In dem Auswertungsblock 72 werden die Daten der Massenspeichervorrichtung 10 mittels der Zielrecheneinheit ausgewertet. Nach dem Auswertungsblock 72 erfolgt anschließend über einen Zweig 74 ein Datenverarbeitungsblock 76.

In dem Datenverarbeitungsblock 76 werden Daten, die sich auf der Massenspeichervorrichtung 10 befinden, mittels der Zielrecheneinheit verarbeitet. Das Verarbeiten der Daten in dem Datenverarbeitungsblock 76 umfasst das Verändern, das Markieren und/oder das Kopieren der Daten. Das Kopieren der Daten erfolgt auf weitere Massenspeicherbauelemente oder Massenspeichermodule und/oder auf weitere Massenspeichervorrichtungen. Nach dem Datenverarbeitungsblock 76 erfolgt über einen Zweig 78 ein zweiter Zwischenblock 80. In dem zweiten Zwischenblock 80 sind somit ein oder mehrere Massenspeichervorrichtungen 10 vorhanden.

Bei einem speziellem Ausführungsbeispiel gemäß Fig. 5 ist von dem Startblock 60 über einen Zweig 98 der erste Zwischenblock 68 zu erreichen. Falls die auf der Massenspeichervorrichtung 10 enthaltenen Daten nicht von der Zielrecheneinheit verarbeitet werden, erfolgt über einen Zweig 100 der zweite Zwischenblock 80. Auf diese Weise ist die Verarbeitung der Daten mittels der Zielrecheneinheit zu überspringen.

Von dem zweiten Zwischenblock 80 erfolgt über einen Zweig 82 die Weitergabe der Massenspeichervorrichtung 10 zu einer weiteren Unterwasserrecheneinheit, die nachfolgend als zweite Unterwasserrecheneinheit bezeichnet wird, zu einem weiteren Schreibleseverfahrensblock 84. In dem Schreibleseverfahrensblock 84 werden Daten der Massenspeichervorrichtung 10 mittels der Unterwasserrecheneinheit 32 gelesen und/oder geschrieben.

Falls das Verfahren nach dem Schreibleseverfahrensblock 84 beendet wird, verzweigt sich der Verfahrensablauf über einen Zweig 86 zu einem Endblock 88.

Falls das Verfahren jedoch noch nicht beendet wird, verzweigt sich der Verfahrensablauf über einen Zweig 89 zu dem ersten Zwischenblock 68, von dem das Verfahren erneut ausführbar ist. Die Massenspeichervorrichtung 10 verbleibt in demselben Unterwasserdruckkörper 30, falls die Auswertung der Daten der Massenspeichervorrichtung 10 nicht erfolgt.

Bei einem weiteren Ausführungsbeispiel gemäß Fig. 5 ist von dem Startblock 60 über einen Zweig 96 der zweite Zwischenblock 80 zu erreichen. Aufgrund einer Historie der Massenspeichervorrichtung 10, d.h. einem oder mehreren vorhergehenden Schreibverfahrensblöcken 64, weist die Massenspeichervorrichtung 10 bereits gespeicherte Daten auf.

Auf diese Weise sind Daten von der ersten Unterwasserrecheneinheit durch Weitergeben der Massenspeichervorrichtung 10 an die Zielrecheneinheit transferiert. Die Zielrecheneinheit transferiert die Daten der Massenspeichervorrichtung 10 durch Kopieren der Daten auf ein oder mehreren Massenspeicherbauelementen oder Massenspeichermodulen und/oder auf ein oder mehreren weiteren Massenspeichervorrichtungen 10. Optional sind die Daten der Massenspeichervorrichtung 10 mittels der Zielrecheneinheit verarbeitbar. Die verarbeiteten Daten der Massenspeichervorrichtung 10 sind durch Weitergeben der Massenspeichervorrichtung 10 zwischen der Zielrecheneinheit und der zweiten Unterwasserrecheneinheit transferierbar.

Alle in der vorstehenden Beschreibung sowie in den Ansprüchen genannten Merkmale sind erfindungsgemäß sowohl einzeln als auch in beliebiger Kombination miteinander einsetzbar. Die Offenbarung der Erfindung ist daher nicht auf die beschriebenen bzw. beanspruchten Merkmalskombinationen beschränkt. Vielmehr sind alle Kombinationen von Einzelmerkmalen als offenbart zu betrachten.

## Patentansprüche

1. Vorrichtung zur Transferierung von Daten von oder zu einem Unterwasserdruckkörper (30) umfassend eine Massenspeichervorrichtung (10), auf der mittels einer Recheneinheit im Inneren des Unterwasserdruckkörper (30), nachfolgend als Unterwasserrecheneinheit (32) bezeichnet, die Daten lesbar und/oder schreibbar sind, wobei mittels der Massenspeichervorrichtung (10) die Daten zwischen der Unterwasserrecheneinheit (32) und einer weiteren Recheneinheit transferierbar sind,
wobei die Massenspeichervorrichtung (10) einen druckfesten, wasserundurchlässigen, luftleeren Isolationskörper (24) aufweist und derart ausgebildet ist, um mit einer an der Außenseite des Unterwasserdruckkörpers (30) angeordneten Verbindungsvorrichtung (36) lösbar verbunden zu werden, und die Massenspeichervorrichtung (10) ein Massenspeicherbauelement (12) und ein Unterwasserverbindungselement (14) aufweist, wobei das Massenspeicherbauelement (12) und das Unterwasserverbindungselement (14) über eine interne Verbindung (18) miteinander verbunden sind und die Massenspeichervorrichtung (10) ein Schalterbauelement (26) aufweist, das derart ausgebildet ist, um die interne Verbindung (18) zwischen externen Kontakten (22) des Unterwasserverbindungselements (14) und den Kontakten des Massenspeicherbauelements (16) schaltbar zu verbinden, sodass ein Trennen oder Verbinden einer elektrisch leitenden Verbindung zwischen der Massenspeichervorrichtung und der Verbindungsvorrichtung kurzschlussfrei durchführbar ist.

2. Vorrichtung nach Anspruch 1,
**dadurch gekennzeichnet, dass**
der Isolationskörper (24) derart ausgebildet ist, um Kontakte (20, 22) des Unterwasserverbindungselements (14) mit Ausnahme externer Kontakte (22) des Unterwasserverbindungselements (14), die interne Verbindung (18) und die Bauelemente (12, 14) mittels Silikon, Kunststoffen, Kunstharzen, insbesondere vergossenem Polyurethan, und/oder anderen elektrisch nichtleitenden druckfesten, wasserundurchlässigen und luftfreien Vergussmassen kurzschlussfrei, druckfest, wasserundurchlässig und luftleer zu isolieren.

3. Vorrichtung nach Anspruch 1 oder 2,
**dadurch gekennzeichnet, dass**
die Vorrichtung die Massenspeichervorrichtung (10) und die Verbindungsvorrichtung (36) am Unterwasserdruckkörper (30) umfasst, wobei die Massenspeichervorrichtung (10) und die Verbindungsvorrichtung (36) zueinander komplementäre, druckbeständige, wasserundurchlässige und lösbare Verbindungselemente, insbesondere ein Stecker-Buchsen-Paar, aufweisen, die derart ausgebildet sind, um elektrische und/oder optische Signale zwischen der Massenspeichervorrichtung (10) und der Unterwasserrecheneinheit (32) zu übertragen.

4. Vorrichtung nach Anspruch 3,
**dadurch gekennzeichnet, dass**
die Verbindungsvorrichtung (36) am Unterwasserdruckkörper (30) eine Nachrichtenleitung (34) aufweist, die derart ausgebildet ist, um die mit der Verbindungsvorrichtung (36) verbundene Massenspeichervorrichtung (10) mit der im Inneren des Unterwasserdruckkörper (30) angeordneten Unterwasserrecheneinheit (32) temporär oder dauerhaft zu verbinden.

5. Vorrichtung nach einem der vorherigen Ansprüche,
**dadurch gekennzeichnet, dass**
das Schalterbauelement (26) einen Magnetschalter und/oder einen Hall-Schalter und/oder ein Reed-Relais aufweist.

6. Datentransfervorrichtung, **gekennzeichnet durch** eine Vorrichtung nach einem der Ansprüche 1 bis 5, einen Unterwasserdruckkörper (30), welcher als Unterwasserfahrzeug (44), insbesondere als unbemanntes, ferngesteuertes oder autonom agierendes Unterwasserfahrzeug, ausgebildet ist, und eine Unterwasserrecheneinheit (32) im Inneren des Unterwasserdruckkörpers (30).

7. Datentransfervorrichtung nach Anspruch 6,
**dadurch gekennzeichnet, dass**
der Unterwasserdruckkörper (30) an seiner Außenseite eine Strömungsvorrichtung (42, 48), insbesondere eine Strömungskappe (42) oder ein Strömungsschild (48), aufweist, die derart ausgebildet ist, um den Strömungswiderstand der Verbindungsvorrichtung (36) und/oder der Massenspeichervorrichtung (10) zu minimieren.

8. Datentransfervorrichtung nach Anspruch 7,
**dadurch gekennzeichnet, dass**
die Massenspeichervorrichtung (10) im Wirkungsbereich der Strömungsvorrichtung (42, 48) und im Bereich der Außenseite des Unterwasserdruckkörpers (30) angeordnet ist.

9. Datentransfervorrichtung nach einem der Ansprüche 6 bis 8,
**dadurch gekennzeichnet, dass**
der Unterwasserdruckkörper (30) mindestens eine, insbesondere zwei, Antennen (40) aufweist, die im Bereich der Strömungsvorrichtung (42, 48) angeordnet sind und die mit der Unterwasserrecheneinheit (32) verbunden sind.

10. Verfahren zum Transferieren von Daten von oder zu einem Unterwasserdruckkörper (30) mit einer Vorrichtung nach einem der Ansprüche 1 bis 5 oder mittels einer Datentransfervorrichtung nach Anspruch 6 bis 9,
wobei die Massenspeichervorrichtung (10) ein Schalterbauelement (26) aufweistund mit einer an der Außenseite des Unterwasserdruckkörpers (30) angeordneten Verbindungsvorrichtung (36) lösbar verbunden wird und die Daten durch Weitergeben der lösbar verbundenen Massenspeichervorrichtung (10) von der Unterwasserrecheneinheit (32) zu der weiteren Recheneinheit transferiert werden und die Massenspeichervorrichtung (10) unter Wasser oder über Wasser. nass oder trocken mittels des Schalterbauelement (26) kurzschlussfrei zum Transferieren der Daten durch Weitergeben der Massenspeichervorrichtung (10) verbunden oder getrennt wird.

11. Verfahren nach Anspruch 10,
**dadurch gekennzeichnet, dass**
die Massenspeichervorrichtung (10) zum Transferieren der Daten von der Unterwasserrecheneinheit (32), nachfolgend als erste Unterwasserrecheneinheit bezeichnet, an die weitere Recheneinheit weitergegeben wird, die eine beabstandete Zielrecheneinheit zum Lesen und/oder Schreiben der Daten, insbesondere zum Speichern von Zielpositionsdaten, ist oder eine beabstandete Recheneinheit eines weiteren Unterwasserdruckkörpers, nachfolgend als zweite Unterwasserrecheneinheit bezeichnet, ist.

12. Verfahren nach Anspruch 10 oder 11,
**dadurch gekennzeichnet, dass**
das Verfahren zur Transferierung der Daten der Massenspeichervorrichtung (10)
- von der ersten Unterwasserrecheneinheit zu der zweiten Unterwasserrecheneinheit oder
- von der ersten Unterwasserrecheneinheit zu der Zielrecheneinheit oder
- von der Zielrecheneinheit zu der ersten oder zweiten Unterwasser-echeneinheit einen der folgenden Schritte oder Schrittfolgen aufweist:
a) Weitergeben der Massenspeichervorrichtung (10) oder
b) Weitergeben der Massenspeichervorrichtung (10) und Kopieren der Daten der Massenspeichervorrichtung (10) auf ein oder mehrere weitere Massenspeicherbauelemente oder Massenspeichermodule und/oder ein oder mehrere weitere Massenspeichervorrichtungen (10).

## Claims

1. Device for transferring data from or to an underwater pressure hull (30) comprising a mass storage device (10) on which the data can be read and/or written by an arithmetic unit inside the underwater pressure hull (30), designated in the following as an underwater arithmetic unit (32), wherein the data can be transferred between the underwater arithmetic unit (32) and another arithmetic unit by the mass storage device (10),
wherein the mass storage device (10) comprises a pressure-proof, water-impermeable, air-free insulating body (24) and is constructed in such a manner that it can be detachably connected to a connection device (36) arranged on the outside of the underwater pressure hull (30), and the mass storage device (10) comprises a mass storage component (12) and an underwater connection element (14), wherein the mass storage component (12) and the underwater connection element (14) are connected to one another by an internal connection (18) and the mass storage device (10) comprises a switch component (26) constructed in such a manner as to switchably connect the internal connection (18) between external contacts (22) of the underwater connection element (14) and the contacts of the mass storage component (16) so that a separation or connection of an electrically conductive connection between the mass storage device and the connection device can be carried out without short circuits.

2. Device according to Claim 1,
**characterized by** that
the insulating body (24) is constructed in such a manner as to insulate without short circuits and in a pressure-proof, water-impermeable, air-free manner contacts (20, 22) of the underwater connection element (14) with the exception of external contacts (22) of the underwater connection element (14), the internal connection (18) and the components (12, 14) by silicone, plastics, artificial resins, in particular cast polyurethane and/or other electrically non-conductive, pressure-proof, water-impermeable air-free cast masses.

3. The device according to Claim 1 or 2,
**characterized by** that
the device comprises the mass storage device (10) and the connection device (36) on the underwater pressure hull (30), wherein the mass storage device (10) and the connection device (36) comprise connection elements which are complementary to one another, pressure-proof, water-impermeable and detachable, in particular a plug-sleeve pair, which are constructed in such a manner as to transfer electrical and/or optical signals between the mass storage device (10) and the underwater arithmetic unit (32).

4. Device according to Claim 3,
**characterized by** that
the connection device (36) on the underwater pressure hull (30) comprises an information line (34) constructed in such a manner as to temporarily or permanently connect the mass storage device (10) connected to the connection device (36) to the underwater arithmetic unit (32) arranged inside the underwater pressure hull (30).

5. Device according to one of the previous claims,
**characterized by** that
the switch component (26) comprises a magnetic switch and/or a Hall switch and/or a Reed relay.

6. Data transfer device, **characterized by** a device according to one of Claims 1 to 5, an underwater pressure hull (30) constructed as an underwater vehicle (44), in particular as an unmanned, remote-controlled or autonomously acting underwater vehicle, and an underwater arithmetic unit (32) inside the underwater pressure hull (30).

7. Data transfer device according to Claim 6,
**characterized by** that
the underwater pressure hull (30) comprises a flow device (42, 48), in particular a flow cap (42) or a flow shield (48) on its outside which is constructed for minimising the flow resistance of the connection device (36) and/or of the mass storage device (10).

8. Data transfer device according to Claim 7,
**characterized by** that
the mass storage device (10) is arranged in the active area of the flow device (42, 48) and in the area of the outside of the underwater pressure hull (30).

9. Data transfer device according to one of Claims 6 to 8,
**characterized by** that
the underwater pressure hull (30) comprises at least one, in particular two aerials (40) which are arranged in the area of the flow device (42, 48) and are connected to the underwater arithmetic unit (32).

10. Method for transferring data from or to an underwater pressure hull (30) with a device according to one of Claims 1 to 5 or by a data transfer device according to Claims 6 to 9,
wherein the mass storage device (10) comprises a switch element (26) and is detachably connected to a connection device (36) arranged on the outside of the underwater pressure hull (30) and the data is transferred by forwarding the detachably connected mass storage device (10) from the underwater arithmetic unit (32) to the other arithmetic unit, and the mass storage device (10) is connected or separated for transferring the data under water or above water, wet or dry by the switch component (26) without short circuits by forwarding the mass storage device (10).

11. Method according to Claim 10,
**characterized by** that
the mass storage device (10) for transferring the data from the underwater arithmetic unit (32) designated in the following as the first underwater arithmetic unit is forwarded to the other arithmetic unit which is a spaced target calculation unit for reading and/or writing the data, in particular for storing target positional data, or is a spaced calculation unit of another underwater pressure hull designated in the following as the second underwater calculation unit.

12. Method according to Claim 10 or 11, **characterized by** that the method for transferring the data of the mass storage device (10)
- from the first underwater arithmetic unit to the second underwater arithmetic unit or
- from the first underwater arithmetic unit to the target calculation unit or
- From the target calculation unit to the first or the second underwater calculation unit
comprises one of the following steps or step sequences:
a) forwarding the mass storage device (10) or
b) forwarding the mass storage device (10) and copying the data of the mass storage device (10) onto one or more other mass storage components or mass storage modules and/or one or more other mass storage devices (10).

## Revendications

1. Dispositif de transfert de données depuis un corps sous pression immergé (30) ou vers ce dernier, comprenant un dispositif de mémoire de masse (10), sur lequel les données peuvent être lues et/ou écrites au moyen d'une unité de calcul à l'intérieur du corps sous pression immergé (30), ci-après désignée par unité de calcul immergée (32), dans lequel les données peuvent être transférées entre l'unité de calcul immergée (32) et une autre unité de calcul au moyen du dispositif de mémoire de masse (10),
le dispositif de mémoire de masse (10) comportant un corps d'isolation (24) résistant à la pression, imperméable à l'eau et vide d'air, et étant réalisé de manière à être connecté de manière séparable à un dispositif de connexion (36) disposé sur le côté extérieur du corps sous pression immergé (30), et le dispositif de mémoire de masse (10) comportant un composant de mémoire de masse (12) et un élément de connexion immergé (14), le composant de mémoire de masse (12) et l'élément de connexion immergé (14) étant connectés l'un à l'autre par le biais d'une connexion intérieure (18) et le dispositif de mémoire de masse (10) comportant un composant commutateur (26), qui est réalisé de manière à connecter de manière commutable la connexion intérieure (18) entre des contacts extérieurs (22) de l'élément de connexion immergé (14) et les contacts du composant de mémoire de masse (16), de telle sorte qu'une séparation ou une connexion d'une connexion électriquement conductrice entre le dispositif de mémoire de masse et le dispositif de connexion peut être exécutée sans court-circuit.

2. Dispositif selon la revendication 1,
**caractérisé en ce que**
le corps d'isolation (24) est réalisé de manière à isoler sans court-circuit, de manière résistante à la pression, imperméable à l'eau et vide d'air des contacts (20, 22) de l'élément de connexion immergé (14), à l'exception de contacts extérieurs (22) de l'élément de connexion immergé (14), la connexion intérieure (18) et les composants (12, 14) au moyen de silicone, de matières synthétiques, de résines synthétiques, en particulier de polyuréthane coulé, et/ou d'autres masses de remplissage non conductrices électriquement, résistantes à la pression, imperméables à l'eau et vides d'air.

3. Dispositif selon la revendication 1 ou 2,
**caractérisé en ce que**
le dispositif comprend le dispositif de mémoire de masse (10) et le dispositif de connexion (36) sur le corps sous pression immergé (30), le dispositif de mémoire de masse (10) et le dispositif de connexion (36) comportant des éléments de connexion, en particulier un ensemble connecteur-prise femelle, complémentaires entre eux, résistants à la pression, imperméables à l'eau et séparables, qui sont réalisés de manière à transmettre des signaux électriques et/ou optiques entre le dispositif de mémoire de masse (10) et l'unité de calcul immergée (32).

4. Dispositif selon la revendication 3,
**caractérisé en ce que**
le dispositif de connexion (36) sur le corps sous pression immergé (30) comporte une ligne de communication (34), qui est réalisée de manière à connecter temporairement ou à demeure le dispositif de mémoire de masse (10) connecté au dispositif de connexion (36) à l'unité de calcul immergée (32) disposée à l'intérieur du corps sous pression immergé (30).

5. Dispositif selon l'une des revendications précédentes,
**caractérisé en ce que**
le composant commutateur (26) comporte un commutateur magnétique et/ou un commutateur à effet Hall et/ou un relais reed.

6. Dispositif de transfert de données, **caractérisé par** un dispositif selon l'une des revendications 1 à 5, un corps sous pression immergé (30) qui se présente sous la forme d'un véhicule sous-marin (44), en particulier un véhicule sous-marin non habité, téléguidé ou agissant de manière autonome, et une unité de calcul immergée (32) à l'intérieur du corps sous pression immergé (30).

7. Dispositif de transfert de données selon la revendication 6,
**caractérisé en ce que**
le corps sous pression immergé (30) comporte sur son côté extérieur un dispositif hydrodynamique (42, 48), en particulier un capot hydrodynamique (42) ou un panneau de protection hydrodynamique (48), qui est réalisé de manière à minimiser la force de traînée du dispositif de connexion (36) et/ou du dispositif de mémoire de masse (10).

8. Dispositif de transfert de données selon la revendication 7,
**caractérisé en ce que**
le dispositif de mémoire de masse (10) est disposé dans le champ d'action du dispositif hydrodynamique (42, 48) et dans la zone du côté extérieur du corps sous pression immergé (30).

9. Dispositif de transfert de données selon l'une des revendications 6 à 8, **caractérisé en ce que**
le corps sous pression immergé (30) comporte au moins une, en particulier deux, antennes (40), qui sont disposées dans la zone du dispositif hydrodynamique (42, 48) et qui sont connectées à l'unité de calcul immergée (32).

10. Procédé de transfert de données depuis un corps sous pression immergé (30) ou vers ce dernier, comprenant un dispositif selon l'une des revendications 1 à 5 ou au moyen d'un dispositif de transfert de données selon les revendications 6 à 9,
dans lequel le dispositif de mémoire de masse (10) comporte un composant commutateur (26) et est connecté de manière séparable à un dispositif de connexion (36) disposé sur le côté extérieur du corps sous pression immergé (30) et les données sont transférées de l'unité de calcul immergée (32) à l'autre unité de calcul par transmission du dispositif de mémoire de masse (10) connecté de manière séparable et le dispositif de mémoire de masse (10) est connecté ou séparé sans court-circuit sous l'eau ou sur l'eau, mouillé ou sec, au moyen du composant commutateur (26), pour le transfert des données par transmission du dispositif de mémoire de masse (10).

11. Procédé selon la revendication 10,
**caractérisé en ce que**
le dispositif de mémoire de masse (10), pour transférer les données de l'unité de calcul immergée (32), ci-après désignée par première unité de calcul immergée, est transmis à l'autre unité de calcul, qui est une unité de calcul cible éloignée destinée à la lecture et/ou l'écriture des données, en particulier au stockage de données de position cible, ou est une unité de calcul éloignée d'un autre corps sous pression immergé, ci-après désignée par seconde unité de calcul immergée.

12. Procédé selon la revendication 10 ou 11,
**caractérisé en ce que**
le procédé de transfert des données du dispositif de mémoire de masse (10)
- de la première unité de calcul immergée à la seconde unité de calcul immergée ou
- de la première unité de calcul immergée à l'unité de calcul cible ou
- de l'unité de calcul cible à la première ou la seconde unité de calcul immergée,
comporte l'une des étapes ou séquences d'étapes suivantes consistant à :
a) transmettre le dispositif de mémoire de masse (10) ou
b) transmettre le dispositif de mémoire de masse (10) et copier les données du dispositif de mémoire de masse (10) sur un ou plusieurs autres composants de mémoire de masse ou modules de mémoire de masse et/ou un ou plusieurs autres dispositifs de mémoire de masse (10).
